# EUROPÄISCHE PATENTANMELDUNG

(11) **EP 1 398 921 A1**
(43) Veröffentlichungstag der Anmeldung: **17.03.2004**
(21) Anmeldenummer: 02020258.6
(22) Anmeldetag: 10.09.2002
(51) Int. Cl.: H04L 12/56, H04N 7/173, H04N 7/16

(54) **Anforderung von Daten über ein Mobilfunknetz und Übertragung der Daten über ein Datenübertragungsnetz**

(71) Anmelder: SIEMENS AKTIENGESELLSCHAFT, 80333 München (DE)
(72) Erfinder: Rammig, Ralf, Dr., 81739 München (DE)

(57) **Zusammenfassung**

Verfahren und Anordnung zur Anforderung von Daten über ein Mobilfunknetz und Übertragung der Daten über ein Datenübertragungsnetz, wobei von einem Mobilfunkendgerät Authentisierungsdaten eines Benutzers mittels wenigstens einer Anmeldungs-Nachricht an einen Authentisierungs-Server, der Teil eines Mobilfunknetzes ist, übermittelt und dort bearbeitet werden. Des weiteren werden die Berechnung und die Rechnungsstellung eines Preises für die Datenanforderung und die Datenübertragung in einem Gebührenerfassungs-Server durchgeführt, der Teil des Mobilfunknetzes ist.

Der Gegenschlüssel für die Entschlüsselung der Daten in einem Datenempfangsteil wird über das Mobilfunknetz übertragen.

## Beschreibung

Verfahren und Anordnung zur Übertragung von Daten mittels gekoppelter Mobilfunk- und Datenübertragungsnetze

Die Erfindung betrifft Verfahren und eine Anordnung zur Anforderung und Übertragung von Daten über ein Mobilfunknetz und ein weiteres Datenübertragungsnetz.

Bis vor wenigen Jahren war der PC, ob im Büro oder zu Hause, das Standardgerät für viele Zwecke der elektronischen Informationsverarbeitung. Dieser PC war über Kabel an Netzwerke wie das Internet oder ein firmeninternes Intranet angeschlossen, um seinem Benutzer das Sammeln und Austauschen von Informationen zu ermöglichen. Heute wird der PC zunehmend abgelöst von Geräten, die den kabellosen Anschluss an Netzwerke erlauben: Nach Verkaufszahlen wird das Notebook in den USA und Europa dem PC in absehbarer Zeit den Rang ablaufen. Der Trend zur mobilen Datenverarbeitung geht aus von Unternehmens-Mitarbeitern, die auch auf Reisen für ihre Tätigkeit Zugang zu komplexen Informationen brauchen; aber auch im privaten Bereich wird es als angenehm empfunden, ein Notebook ohne lästige Kabel im Garten, am Schreibtisch, aber auch im Urlaub wie gewohnt nutzen zu können.

Die Anforderungen an eine kabellose Anbindung sind dabei die gleichen wie die an eine kabelgestützte: Angeforderte Daten sollen in vertretbarem Zeitaufwand über die Anbindung zu erhalten sein. Eine weitere Anforderung an kabellose Verbindungen ist die räumliche Verfügbarkeit: Der Nutzer möchte möglichst überall unbeschränkten Zugang haben. Darüberhinaus soll die Anbindung unabhängig sein von dem Bewegungszustand des Nutzers: Er möchte die angeforderten Daten ja auch im schnell fahrenden Zug in der gewünschten Qualität und Geschwindigkeit erhalten.

Im Grundsatz sind heute eine ganze Reihe von Technologien zur mobilen Datenübertragung bekannt, Schlagworte hierzu sind: GSM, GPRS, UMTS, WLAN, Bluetooth, etc. Die oben genannten Anforderungen sollen dabei einmal durch UMTS erfüllt werden, jedoch liegt die Realisierung von UMTS-Netzen noch in der Zukunft, wobei es bezüglich der konkreten Termine zumindest in vielen europäischen Ländern grosse Unsicherheiten gibt.
GPRS ist zwar bereits verfügbar, beispielsweise in Deutschland, jedoch sind die erzielbaren Datenraten nicht ausreichend für die oben erwähnten Anwendungen.

Gegenwärtig sind drahtlose Standards wie WLAN in der Lage, die Anforderungen an die verfügbaren Bandbreiten zu erfüllen. Jedoch ist die Technologie auf den Betrieb in Büroräumen oder Flughafen-Hallen hin konzipiert, d.h. die Funkzellen beim WLAN sind sehr klein, und eine geographisch ausgedehnte, lückenlose Abdeckung ist mit dieser Technologie, (ebenso wie mit Bluetooth) nicht möglich.

Geographisch verbreitet sind momentan im wesentlichen Mobilfunknetze der 2. Generation, also zum Beispiel GSM-Netze. Viele Betreiber haben untereinander Roaming-Abkommen geschlossen, so daß der Benutzer sogar weltweit erreichbar ist. Allerdings sind die verfügbaren Bandbreiten auf die Übertragung von Sprachsignalen ausgelegt, nicht jedoch auf die Übertragung von komplexen Präsentationen oder gar Multimediadaten.

Um diese Probleme zu lösen, sind Konzepte für Hybrid-Netzwerke entwickelt worden, die zwar eine Verbindung über ein Mobilfunknetz benötigen, zum Herunterladen von Daten mit grosser Bandbreite jedoch ein anderes Übertragungsnetz nutzen. Netzwerktechnologien zum kabellosen Herunterladen von Daten mit grosser Bandbreite und ausreichender geographischer Verfügbarkeit stehen nämlich im Grundsatz bereits zur Verfügung bzw werden in naher Zukunft allgemein zur Verfügung stehen: Die herkömmlichen Hörfunk- und Fernsehsysteme befinden sich gegenwärtig im Umbruch und in der Umstellung von analogen auf digitale Übertragungstechniken. Stichworte zur digitalen Ausstrahlung von Sprache und Bildern sind DAB (Digital Audio Broadcast) und DVB (Digital Video Broadcast). Diese Technologien bieten neben der Übertragung der eigentlichen Audio- und Video-Daten die Möglichkeit, in zusätzlichen Datenkanälen Texte, Bilder und sonstige Daten zu übertragen. Die hierfür zur Verfügung stehenden Bandbreiten bewegen sich in der Grössenordnung 1 Mbps (DAB) bis 10 Mbps (DVB), was für die oben geschilderten Anforderungen der Benutzer ausreicht. Die flächendeckende Einführung dieser Technologien ist für die nahe Zukunft in vielen Ländern geplant, beispielsweise in Schweden oder Deutschland. Die Datenübertragung funktioniert auch bei hohen Geschwindigkeiten des Empfängers.

Die Hybrid-Netzwerke bieten über spezialisierte Netzknoten den Zugang zum allgemeinen Internet. Damit sind alle Leistungen von Service- und Inhalte-Anbietern im Internet für die Nutzer abrufbar. Die Eigenschaften solcher Netzwerke sind in den Fachpublikationen beschrieben, im europäischen Umfeld bspw. unter den Stichworten MEMO ("Multimedia Environment for Mobiles") oder SABINA ("System for Asymmetric Broadband INternet Access"), wobei ersteres Hybrid-Netzwerk auf den Technologien DAB und GSM basiert und letzteres auf DVB und GSM.

Die Daten, die ein Benutzer über eine Mobilfunkverbindung anfordert, werden über den Datenkanal eines Übertragungsnetzes ausgestrahlt, und sind damit für beliebige Benutzer empfangbar. Um zu gewährleisten, dass die vom Benutzer angeforderten Daten nur durch ihn nutzbar sind, müssen diese Daten vor der Übertragung mit einem nutzerspezifischen Schlüssel verschlüsselt werden. Die verschlüsselten Daten werden durch ein Empfangsteil empfangen und die Daten werden an das Datenverarbeitungsgerät übermittelt, wobei die Entschlüsselung mittels eines Gegenschlüssels im Empfangsteil oder im Datenverarbeitungsgerät erfolgt. Der Gegenschlüssel (bei symmetrischer Verschlüsselung ist der Gegenschlüssel mit dem Schlüssel identisch, bei asymmetrischer Verschlüsselung unterscheiden sich die beiden Schlüssel) wird hierzu in das Empfangsteil oder das Datenverarbeitungsgerät des Benutzers eingebracht. Das Verschlüsselungsverfahren und die dazu notwendigen Vorrichtungen erhöhen die Komplexität der Datenübertragungsnetze und damit der Hybrid-Netze, sie erhöhen die Kosten für Aufbau und Betrieb dieser Netze, und sie sind auch für den Benutzer umständlich, der sich um den Erhalt eines Gegenschlüssels kümmern muss, und das womöglich für jede Datenübermittlung aufs Neue.

Weiterhin fehlen bis dato für die Übermittlung individuell angeforderter Daten bei den oben erwähnten, breitbandigen Übertragungsnetzen und ihren Vorläufern Authentisierungsmöglichkeiten ebenso wie entsprechende Gebührenerfassungsmöglichkeiten. Bisher, d.h. beim analogen Rundfunk und Fernsehen, wird das Recht zum Empfang der vom Netzbetreiber vorgegebenen, ausgestrahlten Daten üblicherweise pauschal bezahlt. Für die Nutzung der Datenübertragungsnetze zum Empfang individuell angeforderter Daten wird es in der Regel jedoch sinnvoll sein, Zugangsbeschränkungen zu errichten, sowohl im Grundsatz (Authentisierung im engeren Sinne) als auch für bestimmte Dienst-Angebote (Autorisierung). Darüberhinaus sollte die Möglichkeit bestehen, Gebühren zu erheben, die sich volumenabhängig und/oder zeitabhängig berechnen. Solche Authentisierungs- und Gebührenerfassungssysteme müssten Inhalte-Anbieter oder Netzbetreiber, d.h. in der Regel die Betreiber klassischer Rundfunk- und Fernsehnetze, neu aufbauen. Das ist jedoch teuer und erhöht die Komplexität des Gesamtsystems. Letztlich wird der Preis der Dienste für die Benutzer entsprechend höher. Für die Einführung und zur Förderung der Verbreitung der Technologie dieser Hybridnetze wäre es aber sinnvoll, den Preis niedrig zu halten. Ausserdem sind diese neuen Authentisierungsverfahren für die Benutzer unbequem, weil neben der Einbuchung mit dem Mobilfunkendgerät zusätzlich noch am Empfangsteil oder am Datenverarbeitungsgerät Zugangskennungen eingegeben werden müssen, die sich eventuell der Benutzer darüberhinaus auch noch merken muss. Es ist den Fachleuten bekannt, daß aus der Tatsache, dass viele Benutzer den geschilderten Aufwand scheuen und nur ein Passwort für verschiedenste Kennungen oder nur sehr einfach zu ermittelnde Passwörter nutzen, viele Sicherheitsprobleme resultieren, bspw. im Internet-Umfeld.

Der Erfindung liegt also die Aufgabe zugrunde, einfache und kostengünstige Lösungen für die mit der Einführung von personenbezogenen Diensten in (Breitband-) Übertragungsnetzen verbundenen Aspekte Authentisierung, Verschlüsselung und Gebührenerfassung anzubieten.

Diese Aufgabe wird in ihrem Verfahrensaspekt durch ein Verfahren mit den Merkmalen des Anspruchs 1 gelöst und in ihrem Vorrichtungsaspekt durch eine Anordnung mit den Merkmalen der Ansprüche 14, 16 und 20.

Vorgeschlagen wird zunächst, das Authentisierungsverfahren eines Mobilfunknetzes für die Authentisierung eines Benutzers in Bezug auf die Übertragung von ihm angeforderter Daten über ein Datenübertragungsnetz zu nutzen. Für das Verfahren zur Authentisierung des Benutzers in Bezug auf das Mobilfunknetz werden von dem Mobilfunkendgerät die Authentisierungsdaten des Benutzers mittels einer oder mehrerer Nachrichten an einen Authentisierungs-Server, der Teil des Mobilfunknetzes ist, übermittelt und dort bearbeitet. Die Bearbeitung und Weiterleitung einer Datenanforderungs-Nachricht, die von dem Mobilfunkendgerät des Benutzers über das Mobilfunknetz an einen Datenanbieter gerichtet ist, erfolgt dann im Mobilfunknetz in Reaktion auf das Ergebnis der Bearbeitung der Authentisierungsdaten im Authentisierungs-Server.

Der Datenanbieter übermittelt in Reaktion auf die weitergeleitete Datenanforderungs-Nachricht Daten über das Datenübertragungsnetz, wobei diese Daten mittels eines Schlüssels verschlüsselt über das Datenübertragungsnetz übermittelt, durch ein Empfangsteil empfangen und von diesem an ein Datenverarbeitungsgerät übermittelt werden, wobei die Entschlüsselung mittels eines Gegenschlüssels im Empfangsteil oder im Datenverarbeitungsgerät erfolgt. Vorgeschlagen wird hier, den Gegenschlüssel über das Mobilfunknetz an das Mobilfunkendgerät zu übermitteln, bevor die Übermittlung der Daten beginnt.

Die Berechnung des vom Benutzer zu zahlenden Preises für die Übermittlung der Datenanforderungs-Nachricht über das Mobilfunknetz wird in einem Gebührenerfassungs-Server, der Teil des Mobilfunknetzes ist, durchgeführt. Hier wird vorgeschlagen, die oder einen wesentlichen Teil der Berechnung des vom Benutzer zu zahlenden Preises für die Übermittlung der Daten über das Datenübertragungsnetz ebenfalls in dem Gebührenerfassungs-Server durchzuführen.

Durch die Nutzung der vorhandenen, erprobten und funktionierenden Infrastruktur eines Mobilfunknetzes in Bezug auf Authentisierung und Gebührenerfassung erübrigen sich Investitionen in Konzeption, Aufbau und Betrieb entsprechender, komplexer Verfahren und Strukturen für die Hybrid-Netze; ferner ist von Bedeutung, dass die Einführung und Nutzung der Hybrid-Netze schneller möglich ist. Grosse Teile der Bevölkerung verfügen bereits über Mobilfunkgeräte. Es ist also mit der flächendeckenden Einführung von digitalen Rundfunk- und Fernsehprogrammen für weite Teile der Bevölkerung gleichzeitig noch ein erheblicher Zusatznutzen verbunden, allerdings nur, wenn keine erhebliche Investitionen der Netz- und/oder Inhalteanbieter die Einführung der neuen Dienste verzögern und die Preise stark erhöhen. Die durch die Erfindung ermöglichte schnellere und preisgünstigere Verbreitung und Nutzung der Dienste und die damit voraussichtlich verbundene, erhöhte Akzeptanz bedeutet für die Netzbetreiber wie die Inhalteanbieter verbesserte Umsatzmöglichkeiten und verbesserte Rendite ihrer Investitionen.

Die letzte Aussage des vorhergehenden Absatzes gilt nicht nur für die Benutzer, sondern auch für die Netzbetreiber im Hinblick auf die Zeitskalen der Einführung von UMTS und für die damit verbundenen Kosten. Die durch die Mobilfunknetze verlaufenden Verbindungen bedeuten erhöhte Umsatzmöglichkeiten und Einnahmequellen für die Mobilfunknetzbetreiber. Für die Inhalte-Anbieter, die Betreiber der digitalen Übertragungsnetze sowie der für die Hybridnetze spezifischen Netzanteile, also ggf. die Betreiber analoger Rundfunk- und Fernsehnetze, bedeutet der erfindungsgemässe Rückgriff auf die Strukturen der Mobilfunkbetreiber, dass lediglich mit den Mobilfunkbetreibern über die konkrete Ausgestaltung der Zugangs- und Gebührenerfassungsverfahren sowie die Aufteilung der Einnahmen verhandelt werden muss. Neben den bereits geschilderten Vorteilen vereinfacht sich ausserdem die aufwendige, teure, mit Unsicherheiten behaftete Kundenwerbung und -bindung.

Durch die Übermittlung des Gegenschlüssels über das Mobilfunknetz an das Mobilfunkendgerät erübrigt sich die Notwendigkeit der Nutzung dritter Verbindungswege zwischen dem Benutzer und den Netzbetreibern, z.B. der Postweg. Vielmehr wird der Gegenschlüssel in einer auch für den Benutzer einfachen und bequemen Weise übermittelt: Das Mobilfunkendgerät wird ja für die Anforderung der Daten ohnehin benötigt. Die oben in Bezug auf Komplexität der Netze, Kosten und Schnelligkeit der Einführung der neuen Dienste geschilderten Vorteile gelten für das vorgeschlagene Gegenschlüssel-Übermittlungsverfahren ebenfalls.

In einer Ausführungsform der Erfindung wird das Ergebnis oder ein Teil des Ergebnisses der Bearbeitung der Authentisierungsdaten im Authentisierungs-Server an den Datenanbieter übermittelt. So kann die Bearbeitung der weitergeleiteten Datenanforderungs-Nachricht beim Datenanbieter in Reaktion auf das Ergebnis der Bearbeitung der Authentisierungsdaten im Authentisierungs-Server erfolgen. Hierdurch kann die Kontrolle der Zugriffsrechte der Benutzer flexibel gestaltet werden, etwa dergestalt, dass durch das Mobilfunknetz ein allgemeines Zugriffsrecht des Benutzers auf mehrere Datenanbieter überprüft wird, und ein einzelner Datenanbieter danach aus den übermittelten Daten weitere Zugriffsrechte ermittelt und überprüft. Vorteilhaft ist ferner, dass für den Benutzer dieses Verfahren transparent bleibt.

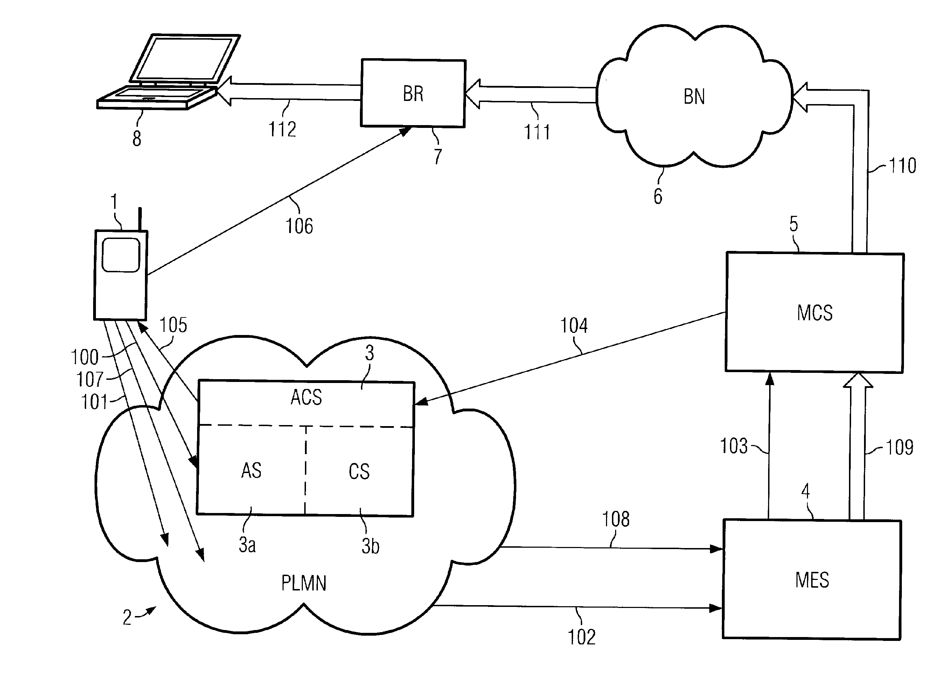

In einer bevorzugten Ausführungsform der Erfindung wird der Schlüssel (sowie der Gegenschlüssel) für eine (etwa jede zehnte) oder jede Übertragung von zusammengehörigen Daten erneut erzeugt, und der Gegenschlüssel wird nach der Datenanforderungs-Nachricht über das Mobilfunknetz an das Mobilfunkendgerät übermittelt. Hierdurch kann eventuellen hohen Sicherheitsansprüchen Rechnung getragen werden. Auch entfällt die Notwendigkeit der Aufbewahrung des Gegenschlüssels für den Benutzer in dessen Geräten, was ansonsten u. U. zu weiteren Sicherheitsrisiken Anlass geben kann. Diese Ausführungsform wird weiter unten anhand der einzigen Figur weiter erläutert. Alternativ besteht in einer weiteren Ausführungsform die Möglichkeit, dass der Schlüssel und der Gegenschlüssel unabhängig von und vor der Übermittlung der Daten erzeugt wird, und dass dann der Gegenschlüssel vor der Datenanforderungs-Nachricht über das Mobilfunknetz an das Mobilfunkendgerät übermittelt wird. Bei diesem Verfahren liegt der Vorteil in der einfachen und unkomplizierten Handhabung in Bezug auf die Einbringung des Gegenschlüssels in die Geräte des Benutzers (dies kann z.B. einmalig im Zuge der bei der erstmaligen Anmeldung des Benutzers notwendigen Verfahren geschehen), sowie ggf. beim Betreiber in Form einer schnelleren Reaktion auf die Umsetzung der Datenanforderungen des Benutzers

Sofern der Datenanbieter Preisinformationen mindestens mittelbar an den Gebührenerfassungs-Server übermittelt, kann letzterer daraus Preise etwa nach dem Volumen oder der voraussichtlichen Übertragungszeit der angeforderten Daten berechnen. In einer weiteren Ausführungsform können Preisinformationen vom Gebührenerfassungs-Server an das Mobilfunkendgerät übermittelt werden, so dass der Benutzer über die Kosten der angeforderten Datenübermittlung informiert wird. Eine sinnvolle Ausgestaltung besteht darin, dass vom Mobilfunkendgerät in Reaktion auf die Preisinformations-Nachricht eine Bestätigungs-Nachricht an das Mobilfunknetz übermittelt wird. Somit kann der Benutzer auf einfache Weise sein Einverständnis mit der bevorstehenden Datenübermittlung und dem Preis übermitteln.

In einer anderen Ausführungsform wird der Gegenschlüssel erst in Reaktion auf die Bestätigungs-Nachricht an das Mobilfunkendgerät übermittelt. Das Mobilfunkgerät übermittelt eine Gegenschlüssel-Bestätigungs-Nachricht zur Bestätigung des Empfangs und der Installation des Gegenschlüssels an das Mobilfunknetz. Der Vorteil liegt hier darin, dass die Verschlüsselungsinformationen nicht unnötig übermittelt werden.

In einer bevorzugten Ausführungsform wird das Mobilfunknetz in Reaktion auf die Bestätigungs-Nachricht (oder ggf. auf die Gegenschlüssel-Bestätigungs-Nachricht) diese bearbeiten und an den Datenanbieter weiterleiten, und der Datenanbieter wird in Reaktion auf die weitergeleitete Datenanforderungs-Nachricht und auf die weitergeleitete Bestätigungs-Nachricht die Daten über das Datenübertragungsnetz übermitteln. Die weitergeleitete Bestätigungs-Nachricht bestätigt dem Datenanbieter dass das Empfangsteil des Benutzers oder das Datenverarbeitungsgerät mit dem Gegenschlüssel ausgerüstet und damit bereit zur Entschlüsselung der Daten ist; die Datenübertragung kann folglich beginnen. Die Bearbeitung im Mobilfunknetz kann insbesondere eine Übermittlung der auf diese Daten-Übermittlung bezogenen Gebührendaten an einen Rechnungslegungs-Server einschliessen, der aus den benutzerbezogenen Gebührendaten eine Rechnung erstellt.

Im einfachsten Fall wird der Benutzer die den Gegenschlüssel repräsentierenden Informationen von der Anzeige des Mobilfunkendgerätes ablesen und in geeigneter Weise in das Empfangsteil bzw. das Datenverarbeitungsgerät einbringen, d.h. eintippen. Der Gegenschlüssel kann jedoch in einer erfindungsgemässen Ausführungsform auch durch eine Leitungsverbindung oder drahtlose Übertragung vom Mobilfunkendgerät zum Datenverarbeitungsgerät oder Empfangsteil übermittelt werden. Zum Beispiel kann das Mobilfunkendgerät den Gegenschlüssel mittels einer Kabelverbindung an das Datenverarbeitungsgerät (etwa ein Notebook) übermitteln, welches wiederum die Informationen an das etwa als Steckkarte ausgeführte Empfangsteil in einem Kartenschacht des Datenverarbeitungsgerätes weiterleitet. Das Empfangsteil kann jedoch auch als abgesetztes Gerät ausgeführt sein, welches die vom Übertragungsnetz empfangenen Daten drahtlos (etwa mittels der WLAN- oder Bluetooth-Technologie) an das Datenverarbeitungsgerät übermittelt.

Es ist im Sinne der Erfindung, wenn eine Mehrzahl von Empfängern bzw Datenverarbeitungsgeräten zum Entschlüsseln der ausgestrahlten Daten präpariert wird. Insbesondere ist es denkbar, dass ein- und derselbe Gegenschlüssel an mehr als ein Mobilfunkendgerät übermittelt wird. Damit wird die, durch die Technologie der verwendeten Übertragungsnetze nahegelegte, Ausstrahlung an eine vorher genau definierte Gruppe von Benutzern möglich.

Bevorzugte Ausführungsformen der Erfindung können insbesondere für Hybrid-Netze Anwendung finden, bei denen das Datenübertragungsnetz auf der DAB- oder DVB- Technologie basiert, oder bei denen das Mobilfunknetz auf der GSM-Technologie basiert. Solche Hybrid-Netze stehen vor der flächendeckenden Einführung; es ist für den Fachmann jedoch offensichtlich, dass die Erfindung keineswegs auf solcherart ausgestaltete Hybrid-Netze beschränkt ist.

Vorteile und Zweckmäßigkeiten der Erfindung ergeben sich im Übrigen aus den Unteransprüchen sowie der nachfolgenden Beschreibung eines bevorzugten Ausführungsbeispiels anhand der einzigen Figur, die ein vereinfachtes Netzwerkdiagramm zur Erläuterung einer Ausführungsform eines erfindungsgemässen Verfahrens zeigt.

In diesem Ausführungsbeispiel beginnt das Verfahren damit, dass sich ein Benutzer mittels des von ihm genutzten Mobilfunkendgerätes 1 an einem Mobilfunknetz 2 anmeldet, indem von dem Mobilfunkendgerät 1 eine Anmeldungs-Nachricht 100 an den Authentisierungs-Server 3a des Mobilfunknetzes 2 übermittelt. Der Authentisierungs-Server 3a bildet in diesem Ausführungsbeispiel eine Einheit mit dem Gebührenerfassungs-Server 3b. Der Authentisierungs-Server 3a bearbeitet die in der Anmeldungs-Nachricht 100 übermittelten Authentisierungsdaten, woraufhin bekannte Verfahren ablaufen, so dass der Benutzer das Mobilfunknetz jetzt entsprechend seinen Zugriffsrechten nutzen kann. Darüberhinaus bearbeitet der Authentisierungs-Server 3a die Authentisierungsdaten in Bezug auf die benutzerspezifischen Nutzungsrechte zur Nutzung des Datenübertragungsnetzes, und speichert das Ergebnis dieser Bearbeitung. Vom Mobilfunkendgerät 1 wird nun zur Anforderung von Daten eine Nachricht 101 an das Mobilfunknetz 2 gesendet. Zur Bearbeitung dieser Nachricht 101 empfangen die damit befassten Vorrichtungen des Mobilfunknetzes in Reaktion auf wenigstens eine diesbezügliche Nachricht an den Authentisierungs-Server 3a von diesem das Ergebnis der entsprechenden Bearbeitung. Als Ergebnis der Bearbeitung der Nachricht 101 wird eine Nachricht 102 mit der Spezifikation der angeforderten Daten sowie der Lokalisation des Mobilfunkendgerätes 1 an einen Datenanbieter 4, der hier direkt ein Medien-Server ist, übermittelt.

In Reaktion auf den Empfang der Nachricht 102 sendet der Medien-Server 4 eine Nachricht 103 wenigstens mittelbar an einen Verschlüsselungs-Server 5, wobei die Nachricht 103 neben Kennzeichnungs-Informationen bezüglich der angeforderten Daten für den Preis relevante Informationen enthalten kann, etwa den Umfang der angeforderten Daten, aber auch Informationen, die sich auf den Benutzer, insbesondere seine Lokalisation, beziehen. Der Verschlüsselungs-Server 5 erzeugt in Reaktion auf die Nachricht 103 Verschlüsselungs-Informationen, etwa Schlüssel und Gegenschlüssel. Der Server 5 erzeugt eine Nachricht 104, die den erzeugten Gegenschlüssel enthält, aber auch Informationen aus der Nachricht 103, insbesondere preisrelevante Informationen. Die Nachricht 104 wird an das Mobilfunknetz 2 übermittelt.

Die Nachricht 104 wird innerhalb des Mobilfunknetzes an den kombinierten Server 3 weitergeleitet. Im Gebührenerfassungs-Server 3b des Mobilfunknetzes werden neben dem Preis für die Übermittlung der Anforderungs-Nachricht 101 über das Mobilfunknetz auch der Preis für die Übertragung der angeforderten Daten vom Medien-Server über das Übertragungsnetz berechnet, und zwar anhand der Informationen, die diesbezüglich durch die Nachrichten 103 und 104 übermittelt wurden.

Die vom Gebührenerfassungs-Server 3b ermittelten Preise, insbesondere für die Übermittlung der angeforderten Daten über das Datenübertragungsnetz, werden mittels einer Nachricht 105 an das Mobilfunkendgerät 1 übermittelt. Der Benutzer kann anhand der in der Nachricht 105 übermittelten Informationen entscheiden, ob die Datenübertragung stattfinden soll.

In der Nachricht 105 kann bereits der Gegenschlüssel enthalten sein. Dieser wird durch die Bearbeitung der Nachricht 104 im Authentisierungs-Server 3a aus dieser Nachricht 104 entnommen, gespeichert, und in die Nachricht 105 eingefügt. Der Gegenschlüssel wird durch den Benutzer oder automatisiert durch einen Vorgang 106 vom Mobilfunkendgerät 1 in das Empfangsteil 7 eingebracht.

Nach dem Vorgang 106 wird vom Mobilfunkendgerät 1 eine Bestätigungs-Nachricht 107 an das Mobilfunknetz 2 übermittelt. Die Bearbeitung dieser Nachricht 107 erfolgt durch eine Vorrichtung im Mobilfunknetz 2, beispielsweise einen Datenanforderungs-Server. Dieser empfängt vom Authentisierungs-Server 3a das Ergebnis oder einen Teil des Ergebnisses der Bearbeitung der Authentisierungsdaten des Benutzers in Bezug auf die benutzerspezifischen Nutzungsrechte zur Nutzung des Datenübertragungsnetzes, woraufhin die Bestätigungs-Nachricht 107 bearbeitet und als Bestätigungs-Nachricht 108 weitergeleitet wird.

Die Bestätigungs-Nachricht 107 wird, mindestens mittelbar und beispielsweise durch den Datenanforderungs-Server, auch an den Gebührenerfassungs-Server 3b weitergeleitet. Daraufhin kann dieser die dem Benutzer zugeordneten, bereits ermittelten Preisinformationen, insbesondere für die Datenübertragung, für Zwecke der Rechnungsstellung bearbeiten. Diese Bearbeitung kann in einer erfindungsgemässen Ausführung jedoch auch und abweichend von dem hier gezeigten Ablauf erst nach dem Erhalt einer Nachricht vom Datenanbieter 4 an den Gebührenerfassungs-Server 3b erfolgen, mittels der mindestens die erfolgte Übermittlung der Daten 109 bestätigt wird.

Die weitergeleitete Bestätigungs-Nachricht 108 ist an den Medien-Server 4 gerichtet. Daraufhin übermittelt der Medien-Server 4 einen Datenstrom 109 an den Verschlüsselungs-Server 5. Dieser verschlüsselt die Daten mit dem zuvor erzeugten Schlüssel und sendet die verschlüsselten Daten in einem Datenstrom 110, versehen mit Lokalisierungs-Informationen, an das Datenübertragungsnetz 6, welches die Lokalisierungs-Informationen bearbeitet, die Daten konvertiert und einen entsprechenden Datenstrom 111 mindestens in der Funkzelle ausstrahlt, in der sich das Mobilfunkendgerät und zweckmässigerweise auch der Empfänger 7 befinden. Der empfangene Datenstrom 111 wird mittels des im Vorgang 106 in den Empfänger 7 eingebrachten Gegenschlüssels entschlüsselt, und dann als Datenstrom 112 an das Datenverarbeitungsgerät 8 weitergeleitet.

In einem weiteren Ausführungsbeispiel wird kein Schlüssel für jede einzelne Datenübermittlung erzeugt, sondern ein Schlüssel-/Gegenschlüssel-Paar wird für die Benutzung bei einer Mehrzahl von Datenübertragungen erzeugt, und zwar anlässlich der Anmeldung eines Benutzers, d.h. Mobilfunkteilnehmers. Der Gegenschlüssel wird dann unabhängig von einer Datenübermittlung in das Empfangsteil 7 eingebracht, etwa bevor das Empfangsteil 7 dem Benutzer zur Verfügung gestellt wird. Im Falle einer Datenübermittlung entfällt die Übermittlung des Gegenschlüssels in den Nachrichten 104, 105, 106 und insgesamt der Vorgang 107. Die Nachricht 108 zur letztendlichen Bestätigung der Datenübermittlung durch den Benutzer ist jedoch auch dann für den weiteren Ablauf des Verfahrens sinnvoll.

In erfindungsgemässen Ausführungsformen wird der Datenstrom zwischen Medien-Server 4 und Datenverarbeitungsgerät 8 aufrechterhalten, auch wenn das Empfangsteil 7, das Datenverarbeitungsgerät 8 und ggf. das Mobilfunkendgerät 1 sich räumlich bewegen, weil diese Verbindung mittels bekannter Verfahren und Vorrichtungen aufrecht erhalten wird (beispielsweise Handover-Verfahren), die im Datenübertragungsnetz 6 sowie weiteren Teilen des Hybrid-Netzwerkes enthalten sind.

Die Erfindung ist nicht auf diese Ausführungsbeispiele und die oben hervorgehobenen Aspekte beschränkt, sondern ebenso in einer Vielzahl von Abwandlungen möglich, die im Rahmen fachgemässen Handelns liegen.

## Patentansprüche

1. Verfahren zur Anforderung von Daten über ein Mobilfunknetz und Übertragung der Daten über ein weiteres Datenübertragungsnetz, wobei
von einem Mobilfunkendgerät Authentisierungsdaten eines Benutzers mittels wenigstens einer Anmeldungs-Nachricht an einen Authentisierungs-Server, der Teil eines Mobilfunknetzes ist, übermittelt und dort bearbeitet werden,
von diesem Mobilfunkendgerät wenigstens eine Datenanforderungs-Nachricht über das Mobilfunknetz an ein Endgerät eines Datenanbieters gerichtet wird,
von einer Sendeeinrichtung des Datenanbieters in Reaktion auf die weitergeleitete Datenanforderungs-Nachricht mittels eines Schlüssels verschlüsselte Daten über das Datenübertragungsnetz übermittelt, durch ein Empfangsteil des Benutzers empfangen und von diesem an ein Datenverarbeitungsgerät übermittelt werden, wobei die Entschlüsselung mittels eines Gegenschlüssels im Empfangsteil oder im Datenverarbeitungsgerät erfolgt und
die Berechnung und Rechnungsstellung eines Preises für die Übermittlung der Datenanforderungs-Nachricht über das Mobilfunknetz in einem Gebührenerfassungs-Server, der Teil des Mobilfunknetzes ist, durchgeführt wird,
**dadurch gekennzeichnet**, daβ
die Bearbeitung der Datenanforderungs-Nachricht in Einrichtungen des Mobilfunknetzes und des Datenanbieters mindestens teilweise in Reaktion auf das Ergebnis der Bearbeitung der Authentisierungsdaten im Authentisierungs-Server erfolgt und/oder
der Gegenschlüssel über das Mobilfunknetz an das Mobilfunkendgerät übermittelt wird, bevor die Übermittlung der Daten beginnt, und/oder
die oder ein wesentlicher Teil der Berechnung sowie der Rechnungsstellung des vom Benutzer zu zahlenden Preises für die Übermittlung der Daten in dem Gebührenerfassungs-Server des Mobilfunknetzes durchgeführt wird.

2. Verfahren nach Anspruch 1,
**dadurch gekennzeichnet, daß**
das Ergebnis oder ein Teil des Ergebnisses der Bearbeitung der Authentisierungsdaten vom Authentisierungs-Server an den Datenanbieter übermittelt wird und
in Reaktion auf diese Übermittlung die Bearbeitung der weitergeleiteten Datenanforderungs-Nachricht beim Datenanbieter erfolgt.

3. Verfahren nach Anspruch 1 oder 2,
**dadurch gekennzeichnet, daß** für eine oder jede Übermittlung von Daten der Schlüssel und der Gegenschlüssel neu erzeugt werden, und
der Gegenschlüssel nach der Datenanforderungs-Nachricht über das Mobilfunknetz an das Mobilfunkendgerät übermittelt wird.

4. Verfahren nach Anspruch 1 oder 2,
**dadurch gekennzeichnet, daß**
der Schlüssel und der Gegenschlüssel unabhängig von und vor der Übermittlung der Daten erzeugt werden, und
der Gegenschlüssel vor der Datenanforderungs-Nachricht über das Mobilfunknetz an das Mobilfunkendgerät übermittelt wird.

5. Verfahren nach einem der vorhergehenden Ansprüche,
**dadurch gekennzeichnet, daß**
vom Datenanbieter Preisinformationen an den Gebührenerfassungs-Server übermittelt werden.

6. Verfahren nach einem der vorhergehenden Ansprüche,
**dadurch gekennzeichnet, daß**
vom Gebührenerfassungs-Server in einer Preisinformations-Nachricht Preisinformationen an das Mobilfunkendgerät übermittelt werden.

7. Verfahren nach Anspruch 6,
**dadurch gekennzeichnet, daß**
vom Mobilfunkendgerät nach Empfang der Preisinformations-Nachricht eine Bestätigungs-Nachricht an das Mobilfunknetz übermittelt wird.

8. Verfahren nach Anspruch 7,
**dadurch gekennzeichnet, daß**
der Gegenschlüssel in Reaktion auf die Bestätigungs-Nachricht an das Mobilfunkendgerät übermittelt wird, und
das Mobilfunkgerät eine Gegenschlüssel-Bestätigungs-Nachricht zur Bestätigung des Empfangs und der Installation des Gegenschlüssels an das Mobilfunknetz übermittelt.

9. Verfahren nach Anspruch 7 oder 8,
**dadurch gekennzeichnet, daß**
die Bestätigüngs-Nachricht oder die Gegenschlüssel-Bestätigungs-Nachricht an eine Auswertungseinrichtung des Datenanbieters weitergeleitet und in Reaktion auf die weitergeleitete Datenanforderungs-Nachricht und auf die weitergeleitete Bestätigungs-Nachricht oder Gegenschlüssel-Bestätigungs-Nachricht die Daten über das Datenübertragungsnetz übermittelt werden.

10. Verfahren nach einem der Ansprüche 7 bis 9,
**dadurch gekennzeichnet, daß**
in Reaktion auf die Bestätigungs-Nachricht oder die Gegenschlüssel-Bestätigungs-Nachricht die dem Benutzer für die Übertragung angeforderter Daten zugeordneten Preisinformationen beim Gebührenerfassungs-Server bearbeitet werden.

11. Verfahren nach einem der Ansprüche 3 bis 10,
**dadurch gekennzeichnet, daß**
der Gegenschlüssel durch eine Leitungsverbindung oder drahtlose Übertragung vom Mobilfunkendgerät zum Datenverarbeitungsgerät oder Empfangsteil übermittelt wird.

12. Verfahren nach einem der Ansprüche 3 bis 10,
**dadurch gekennzeichnet, daß**
ein und derselbe Gegenschlüssel an eine Mehrzahl von Benutzern, insbesondere an deren Mobilfunkendgeräte, übermittelt wird.

13. Verfahren nach einem der vorhergehenden Ansprüche,
**dadurch gekennzeichnet, daß**
die Datenübertragung auf den Technologien Digital Audio Broadcast oder Digital Video Broadcast basiert.

14. Anordnung zur Durchführung des Verfahrens nach einem der vorhergehenden Ansprüche, mit
- einem Authentisierungs-Server in einem Mobilfunknetz, der über eine Verbindungseinheit verfügt, die zum Empfang und zur Übermittlung von Nachrichten von/an Mobilfunkendgeräte, insbesondere zum Empfang von Anmeldungs-Nachrichten, sowie zum Empfang und zur Übermittlung von Nachrichten an weitere Einrichtungen des Mobilfunknetzes ausgebildet ist, und über eine Bearbeitungseinheit, die zur Bearbeitung der in Anmeldungs-Nachrichten enthaltenen Authentisierungsdaten in Bezug auf die benutzerspezifischen Nutzungsrechte zur Nutzung des Mobilfunknetzes sowie zur Speicherung und Übermittlung des Ergebnisses an die Verbindungseinheit ausgebildet ist,
- einem Datenanforderungs-Server in dem Mobilfunknetz, der über eine Verbindungseinheit verfügt, die zum Empfang und zur Übermittlung von Nachrichten von/an Mobilfunkendgeräte ausgebildet ist, und über eine Verbindungseinheit, die zum Empfang und zur Übermittlung von Nachrichten von/an Einrichtungen des Datenanbieters ausgebildet ist,
- einem Gebührenerfassungs-Server, der über eine Bearbeitungseinheit verfügt, die zur Berechnung des von Benutzern zu zahlenden Preises für die Übermittlung von Nachrichten und Sprachdatenströmen über das Mobilfunknetz ausgebildet ist sowie zur Bearbeitung der auf solchen Preisen basierenden Rechnungsstellung, sowie über eine Verbindungseinheit, die zum Empfang und zur Übermittlung von Nachrichten an weitere Einrichtungen des Mobilfunknetzes, insbesondere des Authentisierungs- und des Datenerfassungs-Servers, ausgebildet ist,
**dadurch gekennzeichnet, daß**
die Bearbeitungseinheit des Authentisierungs-Servers zur Bearbeitung von Authentisierungsdaten in Bezug auf benutzerspezifische Nutzungsrechte zur Nutzung eines separaten Daten-übertragungsnetzes sowie zur Speicherung und Übermittlung des Ergebnisses an die Verbindungseinheit des Authentisierungs-Servers ausgebildet ist und/oder
der Datenanforderungs-Servers über eine Verbindungseinheit verfügt, die zum Empfang von Nachrichten von einer Schlüsselspeicher- oder Schlüsselerzeugungseinheit zur Speicherung oder Erzeugung von Verschlüsselungsinformationen, insbesondere von Schlüssel und Gegenschlüssel, und zur Übermittlung wenigstens eines Teils der Verschlüsselungsinformationen, insbesondere des Gegenschlüssels, an die Verbindungseinheit des Datenanforderungs-Servers für Empfang und Übermittlung von Nachrichten von/an Mobilfunkendgeräte ausgebildet ist und/oder
die Bearbeitungseinheit des Gebührenerfassungs-Servers zur Berechnung des von den Benutzern zu zahlenden Preises für die Übermittlung der Daten über ein separates Datenübertragungsnetz sowie zur Bearbeitung der auf solchen Preisen basierenden Rechnungsstellung ausgebildet ist.

15. Anordnung nach Anspruch 14,
**gekennzeichnet durch**
eine Verbindungseinheit des Datenanforderungs-Servers, die zum Empfang von Nachrichten vom Authentisierungs-Server ausgebildet ist, insbesondere zum Empfang einer Nachricht welche das Ergebnis oder einen Teil des Ergebnisses der Bearbeitung von Authentisierungsdaten übermittelt,
eine Speicher- und Bearbeitungseinheit des Datenanforderungs-Servers, die zur Speicherung des Ergebnisses oder eines Teils des Ergebnisses der Bearbeitung von Authentisierungsdaten ausgebildet ist, sowie zur Bearbeitung der Datenanforderungs-Nachricht vom Mobilfunkendgerät an den Datenanbieter, wobei diese Bearbeitungseinheit die Datenanforderungs-Nachricht in Reaktion auf das Ergebnis oder eines Teils des Ergebnisses der Bearbeitung der Authentisierungsdaten weiterleitet.

16. Anordnung nach Anspruch 15,
**dadurch gekennzeichnet, daß**
die Speicher- und Bearbeitungseinheit des Datenanforderungs-Servers zur Übermittlung des Ergebnisses oder eines Teils des Ergebnisses der Bearbeitung von Authentisierungsdaten an die Verbindungseinheit des Datenanforderungs-Servers zur Über-mittlung von Nachrichten von/an Einrichtungen des Datenanbieters ausgebildet ist.

17. Anordnung nach Anspruch 15 oder 16,
**dadurch gekennzeichnet, daß**
der Datenanforderungs-Server für die Übermittlung einer Nachricht an das Mobilfunkendgerät in Reaktion auf den Empfang einer Nachricht von einer Einrichtung des Datenanbieters ausgebildet ist, insbesondere für die Weiterleitung von Informationen, die in der Nachricht des Datenanbieters enthalten sind, an das Mobilfunkendgerät.

18. Anordnung nach einem der Ansprüche 14 bis 17, **gekennzeichnet durch**
eine Bearbeitungseinheit des Datenanforderungs-Servers, die zur Bearbeitung von Bestätigungs-Nachrichten von Mobilfunkendgeräten ausgebildet ist,
wobei der Datenanforderungs-Server zur Übermittlung des Gegenschlüssels an das Mobilfunkendgerät in Reaktion auf den Empfang und die Bearbeitung einer Bestätigungs-Nachricht ausgebildet ist.

19. Anordnung nach einem der Ansprüche 14 bis 18,
**dadurch gekennzeichnet, daß**
der Datenanforderungs-Server zur Übermittlung ein und desselben Gegenschlüssels an eine Mehrzahl von Mobilfunkendgeräten ausgebildet ist.

20. Anordnung nach einem der Ansprüche 14 bis 19,
**dadurch gekennzeichnet, daß**
die Bearbeitungseinheit des Gebührenerfassungs-Servers
zur Verarbeitung von Preisinformationen ausgebildet ist, die von Einrichtungen des Datenanbieters übermittelt werden.

21. Anordnung nach einem der Ansprüche 14 bis 20,
**dadurch gekennzeichnet, daß**
der Gebührenerfassungs-Server zur Übermittlung einer Nachricht, die insbesondere Preis-informationen enthält, an das Mobilfunkendgerät ausgebildet ist.

22. Anordnung nach einem der Ansprüche 14 bis 21,
**dadurch gekennzeichnet, daß**
der Gebührenerfassungs-Server zum Empfang von Bestätigungs-Nachrichten oder Gegenschlüssel-Bestätigungs-Nachrichten von Mobilfunkendgeräten sowie zur Bearbeitung der dem Benutzer für die Übertragung angeforderter Daten über ein separates Datenübertragungsnetz zugeordneten Preise in Reaktion auf den Empfang von Bestätigungs-Nachrichten oder Gegenschlüssel-Bestätigungs-Nachrichten ausgebildet ist.
